# EUROPÄISCHE PATENTSCHRIFT

(11) **EP 2 665 933 B1**
(45) Veröffentlichungstag und Bekanntmachung des Hinweises auf die Patenterteilung: **18.11.2015**
(21) Anmeldenummer: 11808880.6
(22) Anmeldetag: 30.12.2011
(51) Int. Cl.: F04B 1/04, F02M 59/10, F16J 15/16, F16J 15/32

(54) **KRAFTSTOFF-FÖRDEREINRICHTUNG FÜR EINE BRENNKRAFTMASCHINE**
FUEL DELIVERY DEVICE FOR AN INTERNAL COMBUSTION ENGINE
DISPOSITIF DE REFOULEMENT DE CARBURANT POUR UN MOTEUR À COMBUSTION INTERNE

(30) Priorität: 18.01.2011 DE 102011002811
(43) Veröffentlichungstag der Anmeldung: 27.11.2013
(73) Patentinhaber: Robert Bosch GmbH, 70442 Stuttgart (DE)
(72) Erfinder: DUTT, Andreas, 70469 Stuttgart (DE)
(86) Internationale Anmeldenummer: PCT/EP2011/074306
(87) Internationale Veröffentlichungsnummer: WO 2012/097954

(56) Entgegenhaltungen:
- DE-A1- 2 056 807
- DE-A1- 4 305 791
- DE-A1- 19 900 926
- DE-A1-102008 040 833

## Beschreibung

Die Erfindung betrifft eine Kraftstoff-Fördereinrichtung für eine Brennkraftmaschine, wie in z.B. DE 4305791 dargestellt, mit den Merkmalen des Oberbegriffs des Anspruchs 1. Eine derartige Kraftstoff-Fördereinrichtung umfasst ein Gehäuse zur Aufnahme wenigstens eines Fördermoduls und einer Antriebswelle zum Antrieb des Fördermoduls. Dabei ist die Antriebswelle in einer Lagerbohrung des Gehäuses drehbar gelagert. Ferner ist innerhalb der Lagerbohrung eine Dichtungsanordnung umfassend wenigstens einen Wellendichtring zur Abdichtung eines kraftstoffführenden innenliegenden Bereichs gegenüber einem schmierstoffführenden außenliegenden Bereich angeordnet.

### Stand der Technik

Eine gattungsgemäße Kraftstoff-Fördereinrichtung geht beispielsweise aus der Offenlegungsschrift DE 10 2008 040 833 A1 hervor. Sie umfasst ein Gehäuse sowie mindestens ein Fördermodul, das in eine entsprechende Aufnahmeöffnung des Gehäuses eingesteckt ist. Ferner umfasst sie eine in dem Gehäuse gelagerte Antriebswelle für das Fördermodul, welche in einem Lagerabschnitt des Gehäuses drehbar gelagert ist. Der das Fördermodul aufnehmende Bereich ist mit Kraftstoff gefüllt und gegenüber einem Schmierstoff gefüllten Bereich außerhalb der Fördereinrichtung mittels einer Dichtungsanordnung abgedichtet. Die Dichtungsanordnung umfasst vorzugsweise zwei benachbarte und voneinander beabstandete Wellendichtringe, zwischen denen ein Ringraum ausgebildet wird, von dem ein Entlastungskanal zur Ableitung von Leckageflüssigkeit abzweigt. Die Schmierung des außenliegenden Wellendichtrings wird über einen Kanal sichergestellt, welcher in einer Ausgleichswelle ausgebildet ist.

Abdichtungsanordnungen mit wenigstens zwei Wellendichtringen sind in der Regel dann erforderlich, wenn es zwei verschiedene Medien, beispielsweise Kraftstoff und Öl, voneinander zu trennen gilt. Denn die Kraftstoff-Fördereinrichtung wird vorzugsweise unter Ölschmierung an einen Motor angebaut, so dass es das Schmiermittel Öl von dem zu fördernden Medium Kraftstoff zu trennen gilt. Eine gewisse Leckagemenge ist in der Regel jedoch unvermeidbar und kann unterstützend zur Schmierung des Lagerbereichs herangezogen werden.

Oftmals ist das Beölungskonzept des Antriebs der Kraftstoff-Fördereinrichtung unzureichend, so dass der motorseitige Wellendichtring nicht mit genügend Öl versorgt wird. Dadurch erhöht sich der Verschleiß im Kontaktbereich zwischen dem Wellendichtring und der Antriebswelle. Dies kann dazu führen, dass sich der Wellendichtring in die Antriebswelle eingräbt.

Der Erfindung liegt die Aufgabe zugrunde, eine Kraftstoff-Fördereinrichtung der vorstehend genannten Art derart weiterzubilden, dass eine ausreichende Schmierung der Dichtungsanordnung gewährleistet ist. Dadurch sollen der Verschleiß im Bereich der Wellenabdichtung reduziert und langfristig eine gute Dichtwirkung erzielt werden.

Zur Lösung der Aufgabe wird eine Kraftstoff-Fördereinrichtung mit den Merkmalen des Anspruchs 1 vorgeschlagen. Vorteilhafte Weiterbildungen der Erfindung sind in den Unteransprüchen angegeben.

### Offenbarung der Erfindung

Die vorgeschlagene Kraftstoff-Fördereinrichtung umfasst eine Antriebswelle, die erfindungsgemäß über einen Schmierstoffpfad verfügt, welcher Schmierstoff von radial innen nach radial außen in Bezug auf die Längsachse A der Antriebswelle bis hin zum Durchmesser einer an der Antriebswelle anliegenden Dichtkontur des Wellendichtrings führt, so dass der Wellendichtring im Betrieb der Kraftstoff-Fördereinrichtung unter Nutzung einer Zentrifugalkraft über den Schmierstoffpfad mit Schmierstoff versorgbar ist. Somit ist im Betrieb der Fördereinrichtung aufgrund der Nutzung der Zentrifugalkraft eine ausreichende Schmierstoffversorgung sichergestellt. Bei dem Schmierstoff kann es sich sowohl um Kraftstoff aus dem kraftstoffführenden Bereich, als auch um Öl handeln, das von außen der Lagerbohrung zugeführt wird. Der Kraftstoff dient vorzugsweise der Schmierung eines Wellendichtrings, welcher den kraftstoffführenden innenliegenden Bereich begrenzt. Wird Öl als Schmierstoff eingesetzt, dient dieses vorzugsweise der Schmierung eines weiteren Welldichtrings, welcher motorseitig angeordnet ist.

Der konische Verlauf des Umfangsbereiches ist derart gewählt, dass der Wellendurchmesser in Richtung der Dichtungsanordnung zunimmt. Das Schmiermittel bewegt sich aufgrund der Zentrifugalkraft über den Umfangsbereich in Richtung des größeren Durchmessers, das heißt in Richtung der Dichtungsanordnung. Das Schmiermittel, wobei es sich beispielsweise um eine Leckagemenge aus dem kraftstoffführenden innenliegenden Bereich handeln kann, wird demnach über die Zentrifugalkraft zur Dichtungsanordnung hingeführt. Die Dichtkontur des Wellendichtrings liegt dabei bevorzugt an einem zylinderförmigen Abschnitt der Antriebswelle an, um eine Pumpwirkung über die Dichtlippe des Wellendichtrings zu vermeiden.

Ergänzend kann ein Schmierstoffpfad vorgesehen sein, der zumindest teilweise als Versorgungsbohrung innerhalb der Antriebswelle ausgeführt ist. Die Versorgungsbohrung ist wiederum von radial innen nach radial außen geführt, wobei die Zentrifugalkraft den Schmierstoff gegen den außenliegenden Wandungsbereich der Versorgungsbohrung drückt, entlang welcher der Schmierstoff in Richtung des größeren Durchmessers transportiert wird. Auch über die Versorgungsbohrung ist demzufolge eine Schmierstoffversorgung der Dichtungsanordnung realisierbar.

Vorzugsweise ist hierzu die Versorgungsbohrung schräg verlaufend innerhalb der Antriebswelle geführt. Ergänzend kann vorgesehen sein, dass die Versorgungsbohrung im konisch verlaufenden Umfangsbereich der Antriebswelle austritt. Sofern die Dichtkontur an einem zylinderförmigen Abschnitt der Antriebswelle anliegt, ist die Austrittsstelle in Nähe des zylinderförmigen Abschnitts angeordnet. Somit ist sichergestellt, dass das austretende Schmiermittel die Dichtungsanordnung erreicht.

Unterstützend kann vorgesehen sein, dass die Versorgungsbohrung einen Richtungswechsel aufweist, wobei der Richtungswechsel bewirkt, dass die Versorgungsbohrung im Bereich ihres Austritts aus der Antriebswelle in eine Richtung weg vom Wellendichtring führt. Durch die Richtungsumkehr ist der außenliegende Wandungsbereich der Versorgungsbohrung der Dichtungsanordnung zugewandt und kann über den anschließenden Umfangsbereich direkt dem nächsten Wellendichtring zugeführt werden.

Vorteilhafterweise begrenzt wenigstens ein Wellendichtring in axialer Richtung einen Ringraum, in den eine im Gehäuse ausgebildete Rücklaufbohrung mündet. Die Rücklaufbohrung dient der Rückführung einer überschüssigen Schmiermittelmenge und/oder einer Leckagemenge.

Gemäß einer weiteren bevorzugten Ausführungsform der Erfindung umfasst die Dichtungsanordnung wenigstens zwei Wellendichtringe, welche bevorzugt in einem axialen Abstand zueinander in der Lagerbohrung des Gehäuses angeordnet sind. Somit wird zwischen den beiden Wellendichtringen ein Ringraum ausgebildet, in den vorzugsweise ebenfalls eine Rücklaufbohrung mündet. Ein erster innenliegender Wellendichtring dient der Abdichtung eines kraftstoffführenden innenliegenden Bereichs, vorzugsweise dem Triebwerksraum der Fördereinrichtung, gegenüber der Umgebung, bzw. einem schmierstoffführenden außenliegendem Bereich. Während der zweite außenliegende Wellendichtring das Eindringen von Motoröl in den kraftstoffführenden innenliegenden Bereich verhindern soll. Als Schmierstoff kann sowohl Öl als auch Kraftstoff dienen, welcher beispielsweise im Wege der Leckage aus dem kraftstoffführenden innenliegenden Bereich ausgetreten ist.

Bevorzugte Ausführungsformen der Erfindung werden nachfolgend anhand der beiliegenden Zeichnungen näher beschrieben. Diese zeigen:
- Fig. 1: einen schematischen Längsschnitt durch eine aus dem Stand der Technik bekannte Kraftstoff-Fördereinrichtung im Bereich der Lagerbohrung des Gehäuses,
- Fig. 2: einen schematischen Längsschnitt durch eine erste bevorzugte Ausführungsform einer erfindungsgemäßen Kraftstoff-Fördereinrichtung im Bereich der Lagerbohrung des Gehäuses,
- Fig. 3: einen Ausschnitt aus der Fig. 2,
- Fig. 4: einen schematischen Längsschnitt durch eine nicht erfindungsgemäße Ausführungsform einer Kraftstoff-Fördereinrichtung,
- Fig. 5: einen schematischen Längsschnitt durch eine nicht erfindungsgemäße Ausführungsform einer Kraftstoff-Fördereinrichtung,
- Fig. 6: einen schematischen Längsschnitt durch eine weitere bevorzugte Ausführungsform der erfindungsgemäßen Kraftstoff-Fördereinrichtung und
- Fig. 7: einen Ausschnitt aus der Fig. 6.

### Ausführliche Beschreibung der Zeichnungen

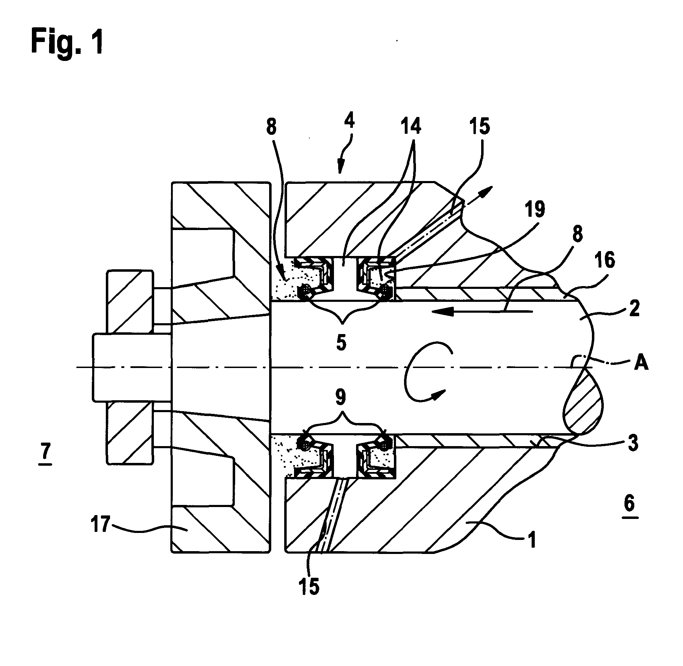

Der Fig. 1 ist ausschnittsweise eine aus dem Stand der Technik bekannte Kraftstoff-Fördereinrichtung zu entnehmen. Der Ausschnitt zeigt eine in einem Gehäuse 1 ausgebildete Lagerbohrung 3 zur Aufnahme einer Antriebswelle 2, welche dem Antrieb einer ebenfalls im Gehäuse 1 aufgenommenen Fördereinrichtung (nicht dargestellt) dient. Im Bereich der Lagerbohrung 3 ist eine Dichtungsanordnung 4 mit zwei Wellendichtringen 5 ausgebildet. Die Wellendichtringe 5 liegen jeweils mit einer Dichtkontur 9 an der Antriebswelle 2 an und trennen auf diese Weise einen kraftstoffführenden innenliegenden Bereich 6 von einem schmierstoffführenden außenliegenden Bereich 7. Zur Seite des kraftstoffführenden innenliegenden Bereichs 6 hin ist die Antriebswelle 2 in einer Lagerbuchse 16 drehbar gelagert. Über den Spalt zwischen Lagerbuchse 16 und Antriebswelle 2 gelangt Kraftstoff zum innenliegenden Wellendichtring 5. Der Spalt bildet somit einen Schmierstoffpfad 8 aus. Ein weiterer Schmierstoffpfad 8 ist zwischen der Stirnseite des Gehäuses 1 und einem drehfest mit der Antriebswelle 2 verbundenen Antriebsrad 17 ausgebildet, welcher der Schmierstoffversorgung des außenliegenden Wellendichtrings 5 dient. Der Schmierstoff ist in diesem Fall Motoröl. Zwischen den Wellendichtringen 5 wird ein Ringraum 14 ausgebildet, in welchen eine im Gehäuse 1 ausgebildete Rücklaufbohrung 15 mündet. Eine weitere Rücklaufbohrung 15 entlastet einen Ringraum 14 zwischen dem innenliegenden Wellendichtring 5 und einem radial verlaufenden Absatz 19 des Gehäuses 1.

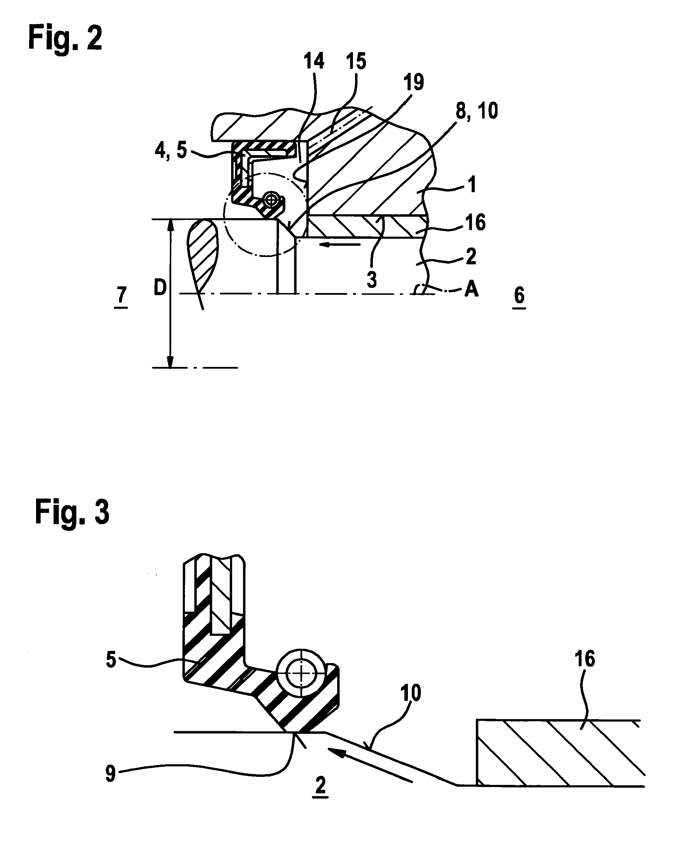

Aus den Figuren 2 und 3 geht eine erste Ausführungsform einer erfindungsgemäßen Fördereinrichtung hervor. Diese unterscheidet sich vom Stand der Technik entsprechend Fig. 1 dadurch, dass die Antriebswelle 2 einen Umfangsbereich 10 besitzt, welcher konisch verläuft. Der konische Verlauf ist derart orientiert, dass der Durchmesser der Antriebswelle 2 in Richtung der Dichtungsanordnung 4 zunimmt. Der Umfangsbereich 10 verbindet einen ersten in der Lagerbuchse 16 aufgenommenen zylinderförmigen Abschnitt der Antriebswelle 2 mit einem zweiten zylinderförmigen Abschnitt, an welchem der innenliegende Wellendichtring 5 mit einer Dichtkontur 9 anliegt. Der konisch verlaufende Umfangsbereich 10 bewirkt im Betrieb der Fördereinrichtung, dass die über die Lagerbohrung 3 austretende Leckagemenge über die Zentrifugalkraft in Richtung des größeren Durchmessers D, das heißt in Richtung der Dichtungsanordnung 4 getrieben wird (siehe Pfeil in der Fig. 3). Über den konischen Verlauf des Umfangsbereiches 10 der Antriebswelle 2 wird demnach das Schmiermittel direkt dem Wellendichtring 5 zugeführt.

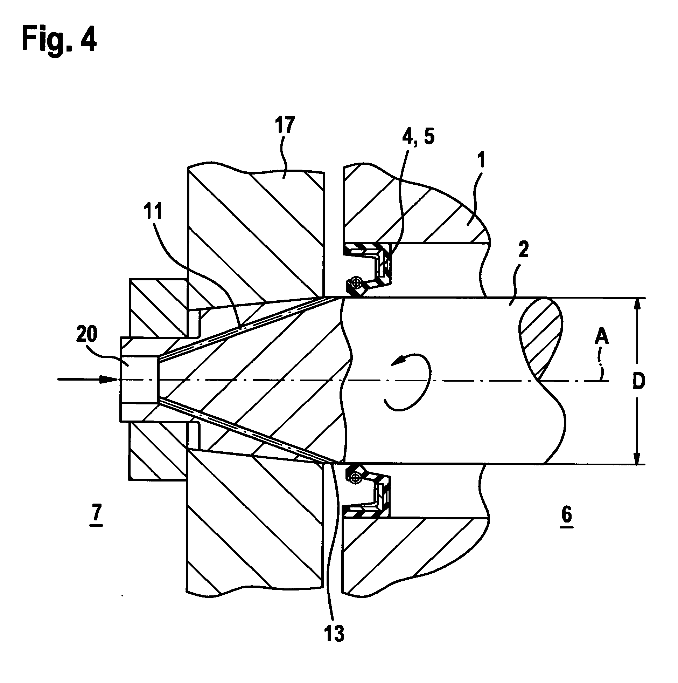

Eine weitere Ausführungsform einer nicht erfindungsgemäßen Fördereinrichtung geht aus der Fig. 4 hervor. Der Schmierstoffpfad 8 ist hier als Versorgungsbohrung 11 in der Antriebswelle 2 ausgebildet. Die Versorgungsbohrung 11 bzw. mehrere Versorgungsbohrungen 11 zweigen von einer gemeinsamen zentralen Bohrung 20 ab und führen somit von radial innen nach radial außen. Kurz vor der Dichtungsanordnung 4 treten die Versorgungsbohrungen 11 aus der Antriebswelle 2 aus, so dass über die Versorgungsbohrungen 11 der außenliegende Wellendichtring 5 mit Schmierstoff versorgbar ist.

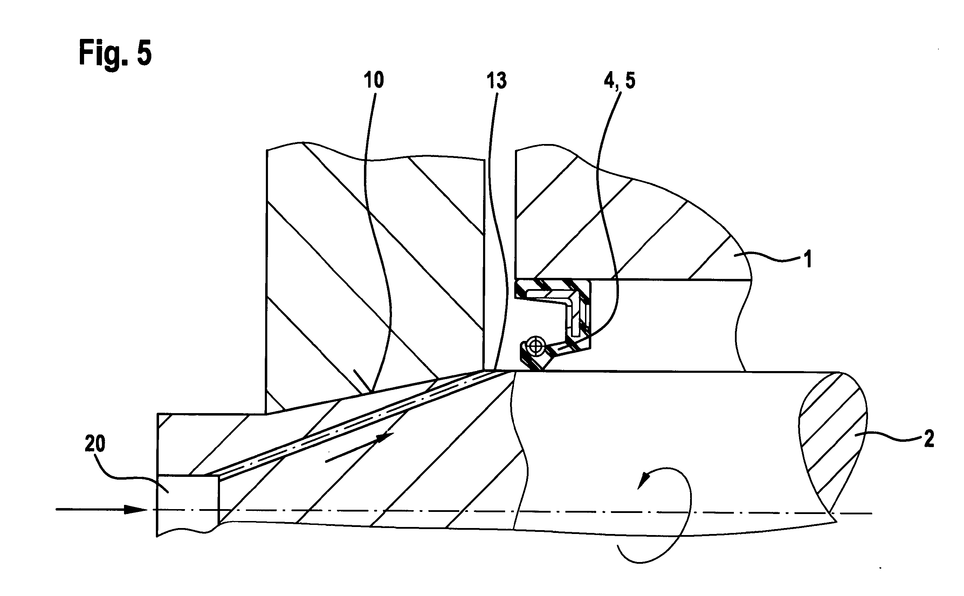

Bei einer nicht dargestellten erfindungsgemäßen Weiterbildung der Ausführungsform der Fig. 5 sind Versorgungsbohrungen 11 mit einem konisch verlaufenden Umfangsbereich 10 der Antriebswelle 2 in der Weise kombiniert, dass der Austritt 13 der Versorgungsbohrungen 11 in den konisch verlaufenden Umfangsbereich 10 fällt. Dadurch ist sichergestellt, dass der aus der Versorgungsbohrung 11 ausgetretene Schmierstoff über die Zentrifugalkraft bis nahe an die Dichtungsanordnung 4 herangeführt wird.

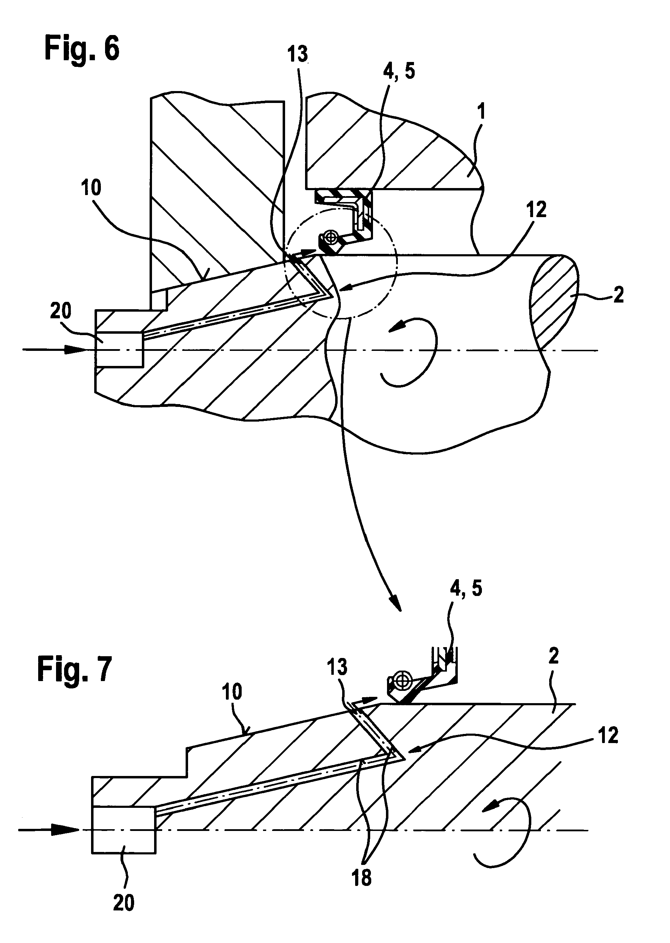

Eine weitere Optimierung geht aus den Figuren 6 und 7 hervor. Hier ist die Versorgungsbohrung 11 gekröpft ausgeführt. Das heißt, dass die Versorgungsbohrung 11 einen Richtungswechsel 12 aufweist. Kurz vor dem Austritt 13 erfolgt eine Richtungsumkehr, so dass der Verlauf der Versorgungsbohrung 11 von der Dichtungsanordnung 4 weg führt. Dies erweist sich insofern als vorteilhaft, als der Schmierstofffilm insbesondere über den außenliegenden Wandungsbereich 18 der Versorgungsbohrung 11 nach radial außen getrieben wird, wobei aufgrund des Richtungswechsels 12 der außenliegende Wandungsbereich 18 auf der der Dichtungsanordnung 4 zugewandten Seite zu

liegen kommt. Beim Anströmen der Dichtkontur 9 des Wellendichtrings 5 muss demnach nicht erst die Versorgungsbohrung 11 überwunden werden.

## Patentansprüche

1. Kraftstoff-Fördereinrichtung für eine Brennkraftmaschine mit einem Gehäuse (1) zur Aufnahme wenigstens eines Fördermoduls und einer Antriebswelle (2) zum Antrieb des Fördermoduls, wobei die Antriebswelle (2) in einer Lagerbohrung (3) des Gehäuses (1) drehbar gelagert ist und wobei innerhalb der Lagerbohrung (3) eine Dichtungsanordnung (4) umfassend wenigstens einen Wellendichtring (5) zur Abdichtung eines kraftstoffführenden innenliegenden Bereichs (6) gegenüber einem schmierstoffführenden äußeren Bereich (7) angeordnet ist, wobei die Antriebswelle (2) über einen Schmierstoffpfad (8) verfügt, welcher Schmierstoff von radial innen nach radial außen in Bezug auf die Längsachse A der Antriebswelle (2) bis hin zum Durchmesser einer an der Antriebswelle (2) anliegenden Dichtkontur (9) des Wellendichtrings (5) führt, so dass der Wellendichtring (5) im Betrieb der Kraftstoff-Fördereinrichtung unter Nutzung der Zentrifugalkraft über den Schmierstoffpfad (8) mit Schmierstoff versorgbar ist, **dadurch gekennzeichnet, dass** der Schmierstoffpfad (8) zumindest teilweise über einen Umfangsbereich (10) der Antriebswelle (2) geführt ist, welcher konisch verlaufend ausgebildet ist.

2. Kraftstoff-Fördereinrichtung nach Anspruch 1, **dadurch gekennzeichnet, dass** der Schmierstoffpfad (8) teilweise als Versorgungsbohrung (11) innerhalb der Antriebswelle (2) ausgeführt ist.

3. Kraftstoff-Fördereinrichtung nach Anspruch 2, **dadurch gekennzeichnet, dass** die Versorgungsbohrung (11) schräg verlaufend innerhalb der Antriebswelle (2) geführt ist und/oder im konisch verlaufenden Umfangsbereich (10) der Antriebswelle (2) austritt.

4. Kraftstoff-Fördereinrichtung nach Anspruch 2 oder 3, **dadurch gekennzeichnet, dass** die Versorgungsbohrung (11) einen Richtungswechsel (12) aufweist und im Bereich ihres Austritts (13) aus der Antriebswelle (2) in eine Richtung weg vom Wellendichtring (5) führt.

5. Kraftstoff-Fördereinrichtung nach einem der vorhergehenden Ansprüche, **dadurch gekennzeichnet, dass** der wenigstens eine Wellendichtring (5) in axialer Richtung einen Ringraum (14) begrenzt, in den eine im Gehäuse (1) ausgebildete Rücklaufbohrung (15) mündet.

6. Kraftstoff-Fördereinrichtung nach einem der vorhergehenden Ansprüche, **dadurch gekennzeichnet, dass** die Dichtungsanordnung (4) wenigstens zwei Wellendichtringe (5) umfasst.

## Claims

1. Fuel delivery device for an internal combustion engine, having a housing (1) for receiving at least one delivery module and having a drive shaft (2) for driving the delivery module, wherein the drive shaft (2) is rotatably mounted in a bearing bore (3) of the housing (1), and wherein, within the bearing bore (3), there is arranged a seal arrangement (4) comprising at least one shaft sealing ring (5) for sealing off a fuel-conducting interior region (6) with respect to a lubricant-conducting exterior region (7), wherein the drive shaft (2) has a lubricant path (8) which conducts lubricant from radially inside to radially outside in relation to the longitudinal axis A of the drive shaft (2) to the diameter of a sealing contour (9), which bears against the drive shaft (2), of the shaft sealing ring (5), such that, during the operation of the fuel delivery device, the shaft sealing ring (5) can be supplied with lubricant via the lubricant path (8) through the utilization of centrifugal force, **characterized in that** the lubricant path (8) at least partially extends over a conically running circumferential region (10) of the drive shaft (2).

2. Fuel delivery device according to Claim 1, **characterized in that** the lubricant path (8) is formed partially as a supply bore (11) within the drive shaft (2).

3. Fuel delivery device according to Claim 2, **characterized in that** the supply bore (11) extends in obliquely running fashion within the drive shaft (2) and/or emerges in the conically running circumferential region (10) of the drive shaft (2).

4. Fuel delivery device according to Claim 2 or 3, **characterized in that** the supply bore (11) exhibits a change in direction (12) and, in the region of its outlet (13) from the drive shaft (2), leads in a direction away from the shaft sealing ring (5).

5. Fuel delivery device according to one of the preceding claims, **characterized in that** the at least one shaft sealing ring (5) delimits, in an axial direction, a ring-shaped chamber (14) into which a return bore (15) formed in the housing (1) issues.

6. Fuel delivery device according to one of the preceding claims, **characterized in that** the seal arrangement (4) comprises at least two shaft sealing rings (5).

## Revendications

1. Dispositif de refoulement de carburant pour un moteur à combustion interne comprenant un boîtier (1) pour recevoir au moins un module de refoulement et un arbre d'entraînement (2) pour l'entraînement du module de refoulement, l'arbre d'entraînement (2) étant supporté de manière rotative dans un alésage de palier (3) du boîtier (1) et à l'intérieur de l'alésage de palier (3) étant disposé un agencement d'étanchéité (4) comprenant au moins une bague d'étanchéité d'arbre (5) pour l'étanchéité d'une région intérieure (6) guidant du carburant par rapport à une région extérieure (7) conduisant du lubrifiant, l'arbre d'entraînement (2) disposant d'un trajet de lubrifiant (8), lequel lubrifiant allant depuis radialement à l'intérieur vers radialement à l'extérieur par rapport à l'axe longitudinal A de l'arbre d'entraînement (2) jusque vers le diamètre d'un contour d'étanchéité (9) de la bague d'étanchéité d'arbre (5) s'appliquant contre l'arbre d'entraînement (2), de telle sorte que la bague d'étanchéité d'arbre (5), pendant le fonctionnement du dispositif de refoulement de carburant, puisse être alimentée en lubrifiant en utilisant la force centrifuge par le biais du trajet de lubrifiant (8), **caractérisé en ce que** le trajet de lubrifiant (8) est guidé au moins en partie sur une région périphérique (10) de l'arbre d'entraînement (2), qui est réalisée de manière à s'étendre sous forme conique.

2. Dispositif de refoulement de carburant selon la revendication 1, **caractérisé en ce que** le trajet de lubrifiant (8) est réalisé en partie sous forme d'alésage d'alimentation (11) à l'intérieur de l'arbre d'entraînement (2).

3. Dispositif de refoulement de carburant selon la revendication 2, **caractérisé en ce que** l'alésage d'alimentation (11) est guidé obliquement à l'intérieur de l'arbre d'entraînement (2) et/ou sort dans la région périphérique s'étendant sous forme conique (10) de l'arbre d'entraînement (2).

4. Dispositif de refoulement de carburant selon la revendication 2 ou 3, **caractérisé en ce que** l'alésage d'alimentation (11) présente un changement de direction (12) et conduit dans la région de sa sortie (13) hors de l'arbre d'entraînement (2) dans une direction s'éloignant de la bague d'étanchéité d'arbre (5).

5. Dispositif de refoulement de carburant selon l'une quelconque des revendications précédentes, **caractérisé en ce que** l'au moins une bague d'étanchéité d'arbre (5) limite un espace annulaire (14) dans la direction axiale, dans lequel débouche un alésage de retour (15) réalisé dans le boîtier (1).

6. Dispositif de refoulement de carburant selon l'une quelconque des revendications précédentes, **caractérisé en ce que** l'agencement d'étanchéité (4) comprend au moins deux bagues d'étanchéité d'arbre (5).
